(19) Europäisches Patentamt
European Patent Office
Office européen des brevets

(11) Veröffentlichungsnummer: **0 327 983**
**A2**

(12) # EUROPÄISCHE PATENTANMELDUNG

(21) Anmeldenummer: **89101863.2**

(22) Anmeldetag: **03.02.89**

(51) Int. Cl.4: **C08L 77/00 , C08L 67/02 , C08L 71/04 , C08K 3/00 , //(C08L77/00,21:00,21:00), (C08L67/00,21:00,21:00), (C08L71/04,21:00,21:00)**

(30) Priorität: **11.02.88 DE 3804161**

(43) Veröffentlichungstag der Anmeldung:
**16.08.89 Patentblatt 89/33**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Payne, Robert, Dr.**
**Bessemerstrasse 20**
**D-6700 Ludwigshafen(DE)**
Erfinder: **Goetz, Walter, Dr.**
**Dhauner Strasse 79**
**D-6700 Ludwigshafen(DE)**

(54) **Füllstoffhaltige thermoplastische Formmassen mit verringertem Abrieb.**

(57) Füllstoffhaltige thermoplastische Formmassen mit verringertem Abrieb, enthaltend

A) 0 bis 90 Gew.% eines thermoplastischen Polyamids,

B) 0 bis 90 Gew.% eines thermoplastischen Polyesters,

C) 0 bis 90 Gew.% eines Polyphenylenethers,

D) 5 bis 60 Gew.% faser- oder teilchenförmige Füllstoffe oder deren Mischungen,

E) 2 bis 25 Gew.% eines schlagzäh modifizierenden Kautschuks, welcher 0,5 bis 60 Gew.% an Gruppen enthält, die sich von säurefunktionellen oder latent säurefunktionellen Monomeren ableiten, und

F) 0,5 bis 10 Gew.% eines thermoplastischen Kautschuks, welcher frei von Gruppen ist, die sich von säurefunktionellen oder latent säurefunktionellen Monomeren ableiten und welcher mit dem Kautschuk E) nicht homogen mischbar ist,

wobei der Gewichtsanteil der Summe der Komponenten A)+B)+C) im Bereich von 30 bis 90 Gew.%, bezogen auf das Gesamtgewicht der Komponenten A) bis F) beträgt.

EP 0 327 983 A2

## Füllstoffhaltige thermoplastische Formmassen mit verringertem Abrieb

Die vorliegende Erfindung betrifft füllstoffhaltige thermoplastische Formmassen, enthaltend

A) 0 bis 90 Gew.% eines thermoplastischen Polyamids,

B) 0 bis 90 Gew.% eines thermoplastischen Polyesters,

C) 0 bis 90 Gew.% eines Polyphenylenethers,

D) 5 bis 60 Gew.% faser- oder teilchenförmige Füllstoffe oder deren Mischungen,

E) 2 bis 25 Gew.% eines schlagzäh modifizierenden Kautschuks, welcher 0,5 bis 60 Gew.% an Gruppen enthält, die sich von säurefunktionellen oder latent säurefunktionellen Monomeren ableiten, und

F) 0,5 bis 10 Gew.% eines thermoplastischen Kautschuks, welcher frei von Gruppen ist, die sich von säurefunktionellen oder latent säurefunktionellen Monomeren ableiten und welcher mit dem Kautschuk E) nicht homogen mischbar ist,

wobei der Gewichtsanteil der Summe der Komponenten A) + B) + D), 30 bis 90 Gew.%, bezogen auf das Gesamtgewicht der Komponenten A) bis F) beträgt.

Darüber hinaus betrifft die Erfindung die Verwendung derartiger thermoplastischer Formmassen zur Herstellung von Formkörpern und die aus den Massen erhältlichen Formkörper.

Polyamide, Polyester und Polyphenylenether sind thermoplastische Kunststoffe, die aufgrund ihrer guten Eigenschaften in vielen Bereichen als Konstruktionswerkstoffe Eingang gefunden haben.

Auch die Schlagzähmodifizierung und die Modifizierung mit Füllstoffen ist an sich bekannt und in der Literatur beschrieben.

Nur beispielsweise sei hier auf die DE-A 26 22 973 verwiesen, in der die Schlagzähmodifizierung von Polyamiden mit säuregruppenhaltigen Olefinpolymerisaten beschrieben wird. Die Massen können gemäß der Beschreibung auch Füllstoffe enthalten.

In der EP-A 22 216 und der DE-A 24 44 584 wird die Schlagzähmodifizierung von Polyestern, die gegebenenfalls Füllstoffe enthalten können, mit Pfropfkautschuken auf der Basis von Butadien- oder Acrylatpolymerisaten beschrieben.

Diese bekannten Produkte wurden im Hinblick auf die mechanischen Eigenschaften, insbesondere die Schlagzähigkeit und Wärmeformbeständigkeit optimiert, doch kann das Gleitreibungsverhalten nicht befriedigen. Die bekannten füllstoffhaltigen, schlagzäh modifizierten thermoplastischen Formmassen auf der Basis von Polyamiden, Polyestern oder Polyphenylenethern weisen einen hohen Gleitreibungskoeffizienten und einen erheblichen Abrieb an daraus hergestellten Formkörpern auf.

Es ist leicht verständlich, daß dadurch die Anwendung der beschriebenen gefüllten schlagzäh modifizierten thermoplastischen Formmassen in bestimmten Bereichen erheblich eingeschränkt ist.

Aufgabe der vorliegenden Erfindung war es daher, füllstoffhaltige, schlagzäh modifizierte thermoplastische Formmassen auf der Basis von Polyamiden, Polyestern, Polyphenylenethern oder deren Mischungen zur Verfügung zu stellen, die neben guten mechanischen Eigenschaften ein verbessertes Gleitreibungsverhalten und einen verringerten Abrieb an aus den Formmassen hergestellten Formkörpern zeigen.

Erfindungsgemäß wird diese Aufgabe durch die thermoplastischen Formmassen gemäß Anspruch 1 gelöst.

Bevorzugte Massen dieser Art sind den Unteransprüchen zu entnehmen.

Als Komponente A) enthalten die erfindungsgemäßen Formmassen 0 bis 90, vorzugsweise 20 bis 80 und insbesondere 25 bis 70 Gew.% eines thermoplastischen Polyamids.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2,2-Di-(4-aminocyclohexyl)-propan.

Weiterhin sind Polyamide, die durch Copolymerisation zweier oder mehrerer der vorgenannten Monomeren erhältlich sind, oder Mischungen mehrerer Polyamide geeignet.

Beispielhaft erwähnt seien ebenfalls teilaromatische Copolyamide, insbesondere solche, deren Einheiten sich Terephthalsäure und Hexamethylendiamin und Adipinsäure und Hexamethylendiamin oder Terephthalsäure, Hexamethylendiamin und ε-Caprolactam ableiten. Insbesondere sind hierbei Copolyamide zu nennen, deren Triamingehalt (Gehalt an Bis-hexamethylentriamin) unter 0,5 Gew.% liegt. Entsprechende Produkte sind in Anlehnung an das in den europäischen Offenlegungsschriften 129 195 und 129 196 beschriebene Verfahren erhältlich.

Abschließend seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Bei der Komponente B), deren Anteil an den erfindungsgemäßen Formmassen 0 bis 90, vorzugsweise 20 bis 80 und insbesondere 25 bis 75 Gew.% beträgt, handelt es sich ebenfalls um an sich bekannte und kommerziell erhältliche Produkte.

Vorzugsweise werden Polyester verwendet, die einen aromatischen Ring in der Hauptkette enthalten. Dieser kann auch substituiert sein, z.B. durch Halogene wie Chlor und Brom und durch $C_1$-$C_4$-Alkylgruppen, z.B. Methyl-, Ethyl-, i- bzw. n-Propyl und i- bzw. n- bzw. t-Butylgruppen.

Die Herstellung derartiger Polyester kann durch Umsetzung von Dicarbonsäuren, deren Estern oder anderer Ester bildender Derivate mit Dihydroxyverbindungen in an sich bekannter Weise erfolgen.

Als Dicarbonsäuren kommen beispielsweise aliphatische und aromatische Dicarbonsäuren in Frage, die auch in Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren sowie Mischungen dieser Carbonsäuren und deren Ester bildende Derivate genannt.

Als Dihydroxyverbindungen werden vorzugsweise Diole mit 2 bis 6 C-Atomen besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)-cyclohexan, Bisphenol A, Neopentylglykol, Mischungen dieser Diole sowie Ester bildende Derivate derselben eingesetzt werden.

Polyester aus Terephthalsäure und einer $C_2$-$C_6$-Diolkomponente wie Polyethylenterephthalat und Polybutylenterephthalat werden besonders bevorzugt.

Die relative Viskosität $\eta_{spez}/c$ derartiger Polyester, gemessen an einer 0,5 gew.%igen Lösung in einem Phenol/ortho-Dichlorbenzol-Gemisch (Gewichtsverhältnis 3:2) bei 25 °C liegt im allgemeinen im Bereich von 1,2 bis 1,8 dl/g.

Unter Polyestern im Sinne der vorliegenden Erfindung sollen auch Polycarbonate verstanden werden, die durch Polymerisation von aromatischen Dihydroxyverbindungen, insbesondere Bisphenol A oder dessen Derivaten, mit Kohlensäure oder deren Derivaten erhältlich sind. Entsprechende Produkte sind an sich bekannt und in der Literatur beschrieben, sowie auch im Handel erhältlich.

Bei der Komponente C), deren Anteil an den erfindungsgemäßen Formmassen 0 bis 90, vorzugsweise 10 bis 80 und insbesondere 25 bis 70 Gew.% beträgt, handelt es sich ebenfalls um an sich bekannte und im Handel erhältliche Produkte.

Nur beispielsweise seien hier einige Polyphenylenether aufgeführt, wie sie unter anderem in O. Olabisy, Polymer Polymer-Miscibility, 1979, Seiten 224 bis 230 und 245 genannt werden. Dies sind Poly-(2,6-diethyl-1,4-phenylen)-oxid, Poly-(2-methyl-6-ethyl-1,4-phenylen)-oxid, Poly-(2-methyl-6-propyl-1,4-phenylen)-oxid, Poly-(2,6-dipropyl-1,4-phenylen)-oxid, Poly-(2-ethyl-6-propyl-1,4-phenylen)-oxid, vorzugsweise Poly-(2,6-dimethyl-1,4-phenylen)-oxid oder Copolymere, z.B. solche, die 2,3,6-Trimethylphenol enthalten, außerdem Mischungen solcher Polymerer. Besonders bevorzugt ist jedoch Poly-(2,6-dimethyl-1,4-phenylen)-oxid.

Im Handel sind auch Mischungen aus Polyphenylenethern und Styrolpolymeren erhältlich, die hier ebenfalls unter der Bezeichnung Polyphenylenether erfaßt werden sollen.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Verfahren zur Herstellung solcher Produkte sind dem Fachmann bekannt, so daß sich hier nähere Angaben erübrigen.

Die vorstehend beschriebenen thermoplastischen Polymeren A) bis C) können allein oder auch in beliebiger Mischung eingesetzt werden.

Von derartigen Mischungen haben in letzter Zeit insbesondere Blends aus Polyphenylenethern und Polyamiden steigendes Interesse gefunden. In derartigen Blends werden vorzugsweise modifizierte Polyphenylenether eingesetzt, wie sie beispielsweise in der EP-A 226 910, der WO-A 87/0540, der WO-A 86/0286 und der EP-A 253 123 beschrieben werden. Wegen näheren Einzelheiten zur Herstellung derartiger modifizierter Polyphenylenether sei auf diese Druckschriften verwiesen.

Unabhängig davon, ob die thermoplastischen Polymere A), B) und C) für sich allein oder in Mischung eingesetzt werden, beträgt der Gewichtsanteil der Summe der Komponenten A) + B) + C) in jedem Fall 30 bis 90, vorzugsweise 30 bis 85 und insbesondere 40 bis 70 Gew.%, bezogen auf das Gesamtgewicht der

Komponenten A) bis F).

Als Komponente D) enthalten die erfindungsgemäßen thermoplastischen Formmassen 5 bis 60, vorzugsweise 7 bis 50 und insbesondere 10 bis 45 Gew.% faser- oder teilchenförmige Füllstoffe oder deren Mischungen.

Als bevorzugte faserförmige Füllstoffe seien Glasfasern, Kohlenstoff-Fasern, Aramid-Fasern und faserförmige Silikate wie Wollastonit genannt. Auch Glaskugeln können als Füllstoffe eingesetzt werden.

Bei der Verwendung von Glasfasern können diese zur besseren Verträglichkeit mit dem thermoplastischen Polymeren A), B) oder C) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als weitere Beispiele für Füllstoffe seien amorphe Kieselsäure, Asbest, Kalziumsilikat, Wollastonit, Magnesiumcarbonat, Kaolin (insbesondere kalzinierter Kaolin), Kreide, gepulverter Quarz, Glimmer und Feldspat genannt.

Als weitere Komponente E) enthalten die erfindungsgemäßen Formmassen 2 bis 25, vorzugsweise 3 bis 20 und insbesondere 5 bis 15 Gew.%, bezogen auf das Gesamtgewicht der Komponenten A) bis F) eines schlagzäh modifizierenden Kautschuks, welcher 0,5 bis 60, vorzugsweise 1 bis 20 Gew.% an Gruppen enthält, die sich von säurefunktionellen oder latent säurefunktionellen Monomeren ableiten.

Prinzipiell sind als Komponente E) alle Kautschuke geeignet, die in Abmischung mit den thermoplastischen Polymeren A), B) und/oder C) eine Verbesserung der Schlagzähigkeit mit sich bringen und mit den latent säurefunktionellen oder säurefunktionellen Monomeren gepfropft oder copolymerisiert werden können.

Als säurefunktionelle oder latent säurefunktionelle Monomere seien hier stellvertretend Acrylsäure, Methacrylsäure, tertiäre Alkylester dieser Säuren, insbesondere tert.-Butylacrylat und Dicarbonsäuren wie z.B. Maleinsäure und Fumarsäure bzw. Derivate dieser Säuren sowie deren Monoester genannt.

Als latent säurefunktionelle Monomere im Sinne der vorliegenden Erfindung sollen solche Verbindungen verstanden werden, die unter den Polymerisationsbedingungen bzw. bei der Einarbeitung der Kautschuke E) in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere die bereits erwähnten tert.-Butylacrylat und tert.-Butylmethacrylat angeführt.

Im allgemeinen handelt es sich bei den mit säurefunktionellen oder latent säurefunktionellen copolymerisierten oder gepfropften Kautschuken um Copolymerisate, die bevorzugt aus mindestens 2 der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Im folgenden werden einige bevorzugte Arten solcher Elastomerer vorgestellt.

Als erste bevorzugte Gruppe sind die sogenannten Ethylen-Propylen-(EPM) bzw. Ethylen-Propylen-Dien- (EPDM) Kautschuke zu nennen, die vorzugsweise ein Verhältnis von Ethylenresten zu Propylenresten im Bereich von 40:60 bis 90:10 aufweisen.

Die Mooneyviskositäten (MLI + 4/100 °C) solcher unvernetzter EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke werden vorzugsweise mit säurefunktionellen oder latent säurefunktionellen Monomeren gepfropft. Hier seien nur Acrylsäure, Methacrylsäure und deren Derivate sowie Maleinsäureanhydrid als geeignete Monomere für diese Pfropfung genannt.

Eine weitere Gruppe bevorzugter Kautschuke sind Copolymere des Ethylens mit Acrylsäure und/oder

Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$R_1C(COOR_2)=C(COOR_3)R_4$ (I)

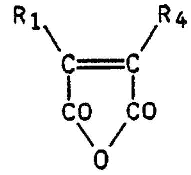

(II)

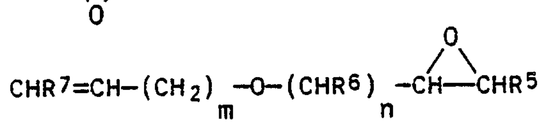

(III)

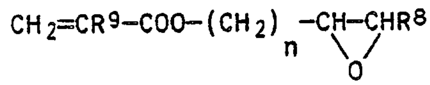

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an säurefunktionellen oder latent säurefunktionellen Monomeren und der Anteil der Acrylsäure- und/oder Methacrylsäureester bzw. der Epoxygruppen enthaltenden Monomeren jeweils im Bereich von 1 bis 49 Gew.%.

Besonders bevorzugt sind Copolymerisate aus
50 bis 98, insbesondere 60 bis 95 Gew.% Ethylen,
0,5 bis 40, insbesondere 1 bis 20 Gew.% Acrylsäure und/oder Maleinsäureanhydrid,
1 bis 45, insbesondere 10 bis 35 Gew.% n-Butylacrylat und/oder 2-Ethylhexylacrylat und/oder Glycidylacrylat und/oder Glycidylmethacrylat.

Weitere bevorzugte Ester der Acryl- und/oder Methacrylsäure sind die Methyl-, Ethyl-, Propyl- und i-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke) C) sind weiterhin Pfropfcopolymerisate mit Butadien, Butadien/Styrol-, Butadien/Acrylnitril und Acrylestern als Pfropfgrundlage, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk E) können auch Pfropfpolymerisate aus
25 bis 98 Gew.% eines Acrylatkautschuks mit einer Glasübergangstemperatur von unter -20 °C als Pfropfgrundlage (Basispolymer)
und
2 bis 75 Gew.% eines copolymerisierbaren ethylenisch ungesättigten Monomeren, dessen Homo- bzw.

Copolymerisate eine Übergangstemperatur von mehr als 25° C aufweisen, als Pfropfauflage (Pfropfhülle) eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25° C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen vorzugsweise eine Glasübergangstemperatur von unter -30° C, insbesondere von unter -40° C auf.

Die Gruppen, die sich von säurefunktionellen oder latent säurefunktionellen Monomeren ableiten, werden in die vorstehend beschriebenen Pfropfcopolymerisate vorzugsweise durch Mitverwendung der entsprechenden Monomeren bei der Pfropfung eingeführt. Entsprechend dem Anteil an solchen Gruppen beträgt der Anteil der entsprechenden Monomeren in der Pfropfmonomerenmischung 0,5 bis 50, vorzugsweise 1 bis 20 und insbesondere 1 bis 10 Gew.%.

Es versteht sich, daß auch Mischungen der vorstehend aufgeführten Kautschuktypen eingesetzt werden können.

Wesentlich für die Erzielung der verbesserten Gleitreibungseigenschaften der erfindungsgemäßen Formmassen bzw. den daraus hergestellten Formkörpern ist die gemeinsame Verwendung eines säuremodifizierten Kautschuks (vorstehend als Komponente E) beschrieben) und eines nicht säuremodifizierten thermoplastischen Kautschuks, der mit dem Kautschuk E) nicht homogen mischbar ist (Komponente F)).

Als nicht säuremodifizierte thermoplastische Kautschuke eignen sich prinzipiell alle dem Fachmann an sich bekannten und in der Literatur beschriebenen thermoplastischen Kautschuke bzw. thermoplastischen Elastomere.

Thermoplastische Kautschuke sind bekanntlich Polymere, welche sich bei Gebrauchstemperatur gummielastisch verhalten, also quasi im "vernetzten Zustand" vorliegen, sich jedoch bei höherer Temperatur wie thermoplastische Polymere verarbeiten lassen.

Die Vernetzung, die für die gummielastischen Eigenschaften verantwortlich ist, ist thermoreversibel, also physikalischer Natur.

Thermoplastische Kautschuke sind im allgemeinen als miteinander unverträglichen elastischen und thermoplastischen Phasen alternierend aufgebaut.

Eine gute Übersicht über thermoplastische Elastomere findet sich z.B. in der Monographie von B.M. Waker "Handbook of Thermoplastic Elastomers", Van Nostrand Reinhold, New York, 1979 oder z.B. in Encyclopedia of Polymer Science and Engineering, Vol. 5, Seiten 416 bis 430.

Wie bereits erwähnt, sind thermoplastische Elastomere in der Regel Mehrphasenzusammensetzungen, in denen die Phasen sehr fein ineinander verteilt sind. In vielen Fällen sind die Phasen chemisch durch Block- oder Pfropfcopolymerisation aneinander gebunden. In einigen Fällen reicht aber auch eine sehr feine Verteilung für die Erzielung der thermoplastischen Eigenschaften aus.

Wenigstens eine Phase ist auf einem Material aufgebaut, das bei Raumtemperatur steif ist, aber beim

Erhitzen flüssig wird.

Eine andere Phase besteht aus einem weicheren Material, das bei Raumtemperatur oder der üblichen Gebrauchstemperatur gummielastische Eigenschaften zeigt.

Ein einfaches Beispiel einer solchen Struktur ist ein A-B-A-Blockcopolymer, wobei A eine Hartphase und B ein Elastomer ist, z.B. Poly(Styrol-b-Elastomer-b-Styrol).

Derartige Produkte sind bekannt und werden z.B. unter den Handelsnamen Kraton®, Solprene®, Stereon®, Tufprene® bzw. Europrene® kommerziell im Handel angeboten. Der Elastomerblock in diesen Produkten besteht in der Regel aus Butadien, Isopren oder Ethylen-Butadien-Copolymeren.

Verfahren zur Herstellung derartiger Blockcopolymere sind z.B. in Encyclopedia of Polymer Science and Engineering, Vol. 5, Seiten 416 bis 430 beschrieben.

Eine weitere Gruppe von thermoplastischen Elastomeren sind die thermoplastischen Polyurethane, wie sie ebenfalls in einer Vielzahl von Veröffentlichungen beschrieben sind.

Auch Polyether/Polyester-Copolymere, insbesondere die unter dem Namen Hytrel® im Handel befindlichen Copolyetherester mit kurzkettigen Estersegmenten und langkettigen Ethersegmenten eignen sich ebenfalls als thermoplastische Kautschuke F).

Weiterhin sind zu nennen Blends (Mischungen) aus Polyolefinen und EP- bzw. EPDM-Kautschuken, wie sie ebenfalls im Handel erhältlich sind.

Stellvertretend seien hier nur die TPR-Typen der Reichhold-Cook oder die unter den Handelsnamen Santoprene®, Wistaflex® oder Zeroflex® im Handel erhältlichen Produkte genannt.

Schließlich seien als letzte Gruppe von thermoplastischen Elastomeren, die als Kautschuke F) geeignet sind, Copolymere von Ethylen und Acrylsäureestern, besonders bevorzugt Ethylen-n-Butylacrylat-Copolymerisate mit einem Ethylengehalt von 50 bis 98 und entsprechend einem n-Butylacrylatgehalt von 2 bis 50 Gew.% genannt.

Wie bereits erwähnt, ist die Verwendung beider Kautschuke E) und F) wesentlich zur Erzielung des gewünschten Ergebnisses, d.h. der verbesserten Gleitreibungseigenschaften der aus den Formmassen erhältlichen Formkörper. Wird nur einer der beiden Kautschuke E) oder F) allein verwendet, so ist die Abriebfestigkeit der entsprechenden Produkte erheblich verschlechtert.

Es versteht sich, daß natürlich auch mehrere Kautschuke E) bzw. mehrere Kautschuke F) in Mischung miteinander eingesetzt werden können, solange nur sichergestellt ist, daß mindestens ein Kautschuk aus jeder der beiden Gruppen vorhanden ist.

Neben den wesentlichen Komponenten A) bis F) können die erfindungsgemäßen Formmassen übliche Zusatzstoffe und Verarbeitungshilfsmittel enthalten.

Deren Anteil beträgt im allgemeinen bis zu 20, vorzugsweise bis zu 10 Gew.%, bezogen auf das Gesamtgewicht der Komponenten A) bis F).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente sowie Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodischen Systems, z.B. Natrium-, Kalium-, und Lithiumhalogenide, gegebenenfalls in Verbindung mit Kupfer-(I)-halogeniden, z.B. Kupferchloriden, -bromiden oder -iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Komponenten A) bis F), einsetzbar.

Beispiele für UV-Stabilisatoren sind verschiedene substituierte Resorcine, Salicylate, Benzotriazole und Benzophenone, deren Anteil im allgemeinen nicht mehr als 2 Gew.%, bezogen auf das Gewicht der Komponenten A) bis F) beträgt.

Gleit- und Entformungsmittel, die in der Regel in Mengen bis zu 1 Gew.% den thermoplastischen Formmassen zugesetzt werden, sind Stearinsäuren, Stearylalkohol, Stearinsäurealkylester und Stearinsäureamide sowie Ester des Pentaerythrits mit langkettigen Fettsäuren.

Die erfindungsgemäßen thermoplastischen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 360 °C, in Abhängigkeit von der Art des enthaltenen thermoplastischen Polymeren A), B) oder C).

Erfindungsgemäße Massen können auch durch einen Pultrusionsvorgang hergestellt werden, wie er in EP-A 56 703 beschrieben wird. Dabei wird der Glasfaserstrang mit Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich gegenüber bekannten Formmassen, die nur einen der Kautschuke E) oder F) enthalten, bei praktisch unveränderten mechanischen Eigenschaften, insbesondere bei praktisch gleichbleibendem Elastizitätsmodul bzw. gleich hoher Schlagzähigkeit durch eine deutlich verringerte Gleitreibeverschleißrate an aus den Massen hergestellten Formkörpern auf.

Beispiele

Es wurden folgende Komponenten eingesetzt:

Komponente A)

Polyhexamethylenadipinsäureamid mit einer relativen Viskosität, gemessen in 1 %iger Lösung in konzentrierter Schwefelsäure, von 2,6

Komponente D)

Wollastonit: Wollastokup®10012 von NYCO, Willsboro, N.Y., U.S.A.

Komponente E)

Ethylen-Propylenkautschuk (Ethylen:Propylen-Gewichtsverhältnis: 45:55), gepfropft mit 1 % Maleinsäureanhydrid; MFI 150 g/10 min bei 230 °C und 21,6 kg Belastung (Vistalon® 457 der Firma Exxon Chemical)

Komponente F)

Ethylen-n-Butylacrylat-copolymerisat aus 93 Gew.% Ethylen und 7 Gew.% n-Butylacrylat, mit einem Schmelzindex MFI von 10,0 (190 °C, 2,16 kg Belastung)

Zur Herstellung der erfindungsgemäßen Formmassen wurden die Komponenten A), D), E) und F) gemischt, bei 280 °C auf einem Extruder aufgeschmolzen, extrudiert und granuliert.

Im Anschluß daran wurden im Spritzguß Prüfkörper zur Bestimmung der Gleitreibeverschleißrate hergestellt. Die Messung der Gleitreibeverschleißrate in µm/km wurden bei Flächendrucken von 1 $N/mm^2$ bzw. 3,14 $N/mm^2$ durchgeführt.

Die Zusammensetzung der Massen sowie die Ergebnisse der Messungen sind der nachfolgenden Tabelle zu entnehmen.

Tabelle

| Bsp.-Nr. | Zusammensetzung (Gew.%) | | | | Elastizitätsmodul $N/mm^2$ (DIN 53 457) | Schädigungsarbeit (DIN 53 443) Nm | Gleitreibeverschleißrate [µm/km] | |
|---|---|---|---|---|---|---|---|---|
| | Komp.A | Komp.D | Komp.E | Komp.F | | | 1 $N/mm^2$ | 3,14 $N/mm^2$ |
| 1 | 60,3 | 30,0 | 5,2 | 3,0 | 4400 | 42 | 0,5 | 1,3 |
| 2V | 60,3 | 30,0 | 8,1 | - | 4400 | 44 | 2,9 | 12,0 |

V = Vergleichsbeispiel

Die Ergebnisse in der Tabelle zeigen, daß für die Erzielung einer verbesserten Gleitreibefestigkeit die gemeinsame Verwendung sowohl eines Kautschuks E) (säuremodifiziert) als auch eines Kautschuks F) erforderlich ist.

## Ansprüche

1. Füllstoffhaltige thermoplastische Formmassen mit verringertem Abrieb und verringerter Gleitreibung, enthaltend
A) 0 bis 90 Gew.% eines thermoplastischen Polyamids,
B) 0 bis 90 Gew.% eines thermoplastischen Polyesters,
C) 0 bis 90 Gew.% eines Polyphenylenethers,
D) 5 bis 60 Gew.% faser- oder teilchenförmige Füllstoffe oder deren Mischungen,
E) 2 bis 25 Gew.% eines schlagzäh modifizierenden Kautschuks, welcher 0,5 bis 60 Gew.% an Gruppen enthält, die sich von säurefunktionellen oder latent säurefunktionellen Monomeren ableiten, und
F) 0,5 bis 10 Gew.% eines schlagzäh modifizierenden thermoplastischen Kautschuks, welcher frei von Gruppen ist, die sich von säurefunktionellen oder latent säurefunktionellen Monomeren ableiten und welcher mit dem Kautschuk E) nicht homogen mischbar ist,
wobei der Gewichtsanteil der Summe der Komponenten A)+B)+C) im Bereich von 30 bis 90 Gew.%, bezogen auf das Gesamtgewicht der Komponenten A) bis F) liegt.

2. Thermoplastische Formmassen nach Anspruch 1, gekennzeichnet durch folgende Gehalte:
A) 30 bis 80 Gew.%,
D) 5 bis 60 Gew.%,
E) 2 bis 25 Gew.%, und
F) 0,5 bis 10 Gew.%.

3. Füllstoffhaltige thermoplastische Formmassen nach Anspruch 1, gekennzeichnet durch folgende Gehalte:
B) 30 bis 80 Gew.%,
D) 5 bis 60 Gew.%,
E) 2 bis 25 Gew.%, und
F) 0,5 bis 10 Gew.%.

4. Thermoplastische Formmassen nach Anspruch 1, gekennzeichnet durch folgende Gehalte:
C) 30 bis 80 Gew.%,
D) 5 bis 60 Gew.%,
E) 2 bis 25 Gew.%, und
F) 0,5 bis 10 Gew.%.

5. Füllstoffhaltige thermoplastische Formmassen nach einem der Ansprüche 1 bis 4, dadurch gekennzeichnet, daß der Gehalt an der Komponente E) 3 bis 20 Gew.% beträgt.

6. Füllstoffhaltige thermoplastische Formmassen nach Anspruch 5, dadurch gekennzeichnet, daß der Gehalt an der Komponente E) 5 bis 15 Gew.% beträgt.

7. Füllstoffhaltige thermoplastische Formmassen nach mindestens einem der Ansprüche 1 bis 6, dadurch gekennzeichnet, daß der Gehalt an der Komponente F) 2 bis 5 Gew.% beträgt.

8. Verwendung der füllstoffhaltigen thermoplastischen Formmassen gemäß mindestens einem der Ansprüche 1 bis 7 zur Herstellung von Fasern, Folien und Formkörpern.

9. Formkörper erhältlich aus füllstoffhaltigen thermoplastischen Formmassen gemäß mindestens einem der Ansprüche 1 bis 7.